# EUROPEAN PATENT SPECIFICATION

(11) **EP 1 083 801 B1**
(45) Date of publication and mention of the grant of the patent: **14.01.2004**
(21) Application number: 99920575.0
(22) Date of filing: 01.06.1999
(51) Int. Cl.: A23L 3/18

(54) **METHOD AND APPARATUS FOR THE PASTEURIZATION OF LIQUID PRODUCTS IN A CONTINUOUS FLOW**
VERFAHREN SOWIE VORRICHTUNG ZUR PASTEURISIERUNG VON FLUESSIGEN PRODUKTEN IM KONTINUIERLICHEN FLUSS
PROCEDE ET APPAREIL DE PASTEURISATION DE PRODUITS LIQUIDES S'ECOULANT EN CONTINU

(30) Priority: 03.06.1998 DK 74698
(43) Date of publication of application: 21.03.2001
(73) Proprietor: SANDER HANSEN A/S, 2605 Brondby (DK)
(72) Inventor: NIELSEN, Jorgen, Tage, DK-3150 Hellebaek (DK); DALUM, Kim, Christian, DK-2970 Haersholm (DK)
(74) Representative: Nielsen, Henrik Sten
(86) International application number: PCT/DK1999/000290
(87) International publication number: WO 1999/062360

(56) References cited:
- EP-A1- 0 081 256
- EP-A1- 0 118 134
- WO-A1-88/09621
- WO-A1-94/09652

## Description

### Description of the invention

The invention concerns a method for the pasteurization of a liquid product in a continuous flow in an apparatus which has a regenerative part and a pasteurizing part between which parts the product is led.

The invention also concerns an apparatus for the execution of the above method, said apparatus having a regenerative part and a pasteurizing part between which parts the product is led.

In the manufacture of products which can be spoiled by bacteria, especially within the foodstuffs industry, it is commonly-known to destroy the bacterial flora by pasteurization, which is a heat treatment which kills the harmful bacteria by exposing them to higher temperatures than they can tolerate. The effect of the pasteurization is measured in PU and depends on the temperature which is used, and on the time for which the product is exposed to this temperature.

However, the product is also damaged by intense heating, and demands are therefore placed on the heat treatment with regard to time and temperature.

Such a pasteurization of a continuous flow of a liquid product is known e.g. from the brewing industry, in the form of beer or similar products which must later be containerised, for example in bottles.

The product to be pasteurised can either be pasteurized before it is transferred to smaller containers, or after the containers have been fitted. The following description deals only with a pasteurization process which takes place before the product is transferred to smaller containers, a so-called plate pasteurization.

The product flow through a plate pasteurization apparatus will normally take place in the following manner. The product flows into a plate heat exchangers regenerative part, where energy is exchanged between the cold product on the way in and the hot already-pasteurized product on its way out. The product is thus first heated in the regenerative section, after which it is pumped into the next section of the heat exchanger where it is heated to the pasteurization temperature.

The product is now led out into a "holding pipe", the length and flow rate through which is determinative of the pasteurization time. Out of regard for space, the holding pipe is often configured as en elongated spiral. When the product has passed through and reaches the end of the holding pipe, the product has been pasteurized and it is led into the second chamber in the regenerative part of the heat exchanger, where it is cooled down to the discharge temperature by the cold product lowing into the heat exchanger.

The pasteurized product can now be filled into a container. In order to adjust the capacity between the filling plant and the pasteurization apparatus, there is often introduced a flow-control valve and a buffer tank. Moreover, use can be made of a cooler if it is desired to further reduce the discharge temperature.

A stop in production can occur if other machines, such as e.g. the filling plant or the bottling machine are stopped. A stop in the production line is a problem for a plate pasteurization apparatus, which is dependent on a continuous process in order to achieve the correct processing. During a stoppage, the product in the holding pipe, which has the pasteurization temperature, will not have the possibility of being cooled down. Consequently, the product becomes over-pasteurized and will normally be discarded before the line is re-started.

A second problem is to achieve the correct temperatures when the line is re-started. The regenerative section will have the average temperature between the cold and the hot product, while at the same time the supply of heat to the heating section is closed down. Therefore, the "new" product must be discarded until the temperature is correct, or it must be replaced by water which is also discarded.

These circumstances result in a loss of resources and not least in a delay in the re-starting of the production. Therefore, the above-mentioned buffer tank will often be introduced after the plate pasteurization apparatus. This buffer tank will normally be capable of containing up to half an hour's production, and can hereby reduce the number of stoppages of the plate pasteurization apparatus.

Another way in which this problem can be solved is to provide the plate pasteurization apparatus with a by-pass. Compared with the simple plate pasteurization apparatus, here there is introduced an extra valve which can open for the circulation, so that the pasteurized product can again be used as input to the plate pasteurization apparatus. The function of the cooler during the by-pass is to cool the pasteurized product down to the normal input temperature, so that the temperature balance is maintained through the whole of the plate pasteurization apparatus.

The result is that the same product is pasteurized again and again and therefore becomes over-pasteurized. For this reason, the plate pasteurization apparatus will often be filled with water just before it goes into by-pass. Before re-starting, the water must again be replaced by the product. This procedure takes time and results in a great consumption of water and a certain product wastage, which means that a large buffer tank after the plate pasteurization apparatus is necessary in order to reduce the number of times the production line is stopped.

The use of a by-pass also has the result that during a stoppage, continuous use is made of the same energy for heating as during operation. Moreover, a corresponding energy is used for the cooling of the product or the water which is circulated.

WO-A-8809621, WO-A-9409652 and EP-A-0118134 each disclose an apparatus comprising a holding cell or holding pipe in which the product to be treated is pasteurized simply by flowing through it at a certain temperature above the minimum temperature for taking up PU's. As there is no possibility of cooling the product in the holding tube in case of sudden stoppage, the product in the holding tube will be over pasteurized and will have to be discarded when starting up again.

EP-A-0081256 discloses an apparatus wherein the pasteurizing part consists of a high temperature heat exchanger with no possibility of cooling in the pasteurizing part is disclosed or shown. Therefore the product in the pasteurizing part will be subjected to over pasteurization when a sudden stop takes place in the flow of product.

It is therefore the object of the invention to provide a method for avoiding the disadvantages of space-demanding equipment and resource-demanding procedures and to avoid product wastage by over-pasteurization.

This object is achieved by a method according to claim 4 and an apparatus according to claim 1.

By this method it is ensured that pasteurization can take place without a great waste of the product and of substitution water and a high consumption of energy during an operational stoppage, in that during the stoppage it is not necessary to replace the product with water. At the same time, it is also ensured that no under-pasteurization of the product occurs, and that over-pasteurization is limited to the greatest possible extent.

The method also ensures that it is possible for production to take place without a buffer tank between the pasteurization apparatus and the filling machine, or with a possible buffer tank with very small volume.

This apparatus results in a considerable saving in space, in that despite the introduction of a further heat exchanger, space is saved for both holding pipe and for the buffer tank. Moreover, since there is no continuous consumption of energy for heating and cooling during a stop in production, a saving in energy is achieved.

Furthermore, a more simple cleaning of the apparatus is achieved, i.e. Central inplace Cleaning, in that the construction does not include extra pipe loops or pipe ends without flow. Moreover, the buffer tank is very small or can be omitted completely, which all-in-all will save large amounts of CIP liquids and CIP installations.

Advantageous embodiments of the apparatus and method according to the invention are specified in claims 2-3 and 5-6, respectively.

### Description of the figures in the drawing

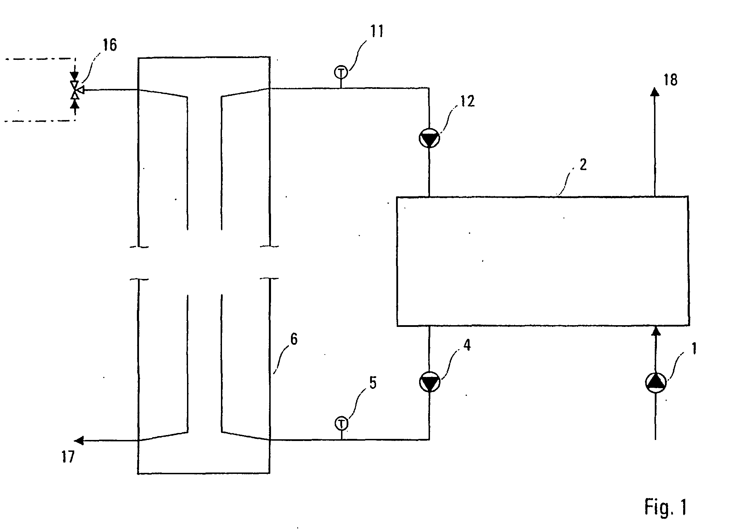

- Fig. 1: shows a schematic example of a general embodiment of a pasteurizing apparatus for the pasteurization of liquid products in a continuous flow,
- fig. 2: shows a schematic example of a pasteurizing apparatus as shown in fig. 1, but with two regenerative zones and three pasteurizing zones, and
- fig. 3: shows a schematic example of a pasteurizing apparatus as shown in fig. 2, but with re-circulation in the regenerative part.

### Description of an example embodiment

Generally seen, an apparatus for the pasteurizing of liquid products in a continuous flow, as for example fluid foodstuffs and beverages, consists of a regenerative part 2 into which the product is fed by a supply pump 1. After the regenerative part 2, the product is led further to the pasteurizing part 6 which cannot only heat the product to the pasteurization temperature, but also cool the product down in the event of a stop in production. Both the regenerative part 2 and the pasteurizing part 6 consist of heat exchangers. Heating or cooling takes place by supplying hot or cold water via a mixing valve 16 to the pasteurizing part 6. Temperature sensors 5, 11 are placed before and after the pasteurizing part 6, so that the pasteurization process can be controlled. Between the regenerative part 2 and the pasteurizing part 6 there are also placed booster pumps 4, 12 which ensure that the product has constant over-pressure in the apparatus.

The product is now led back to the regenerative part 2 where it transfers its heat to the product in the inlet. Hereafter, the product is led to an outlet 18 where, for example, a filling plant (not shown) can be placed.

The apparatus can be produced in several configurations, depending on demands regarding temperatures and pasteurizing. The temperatures used in the following are thus only examples, since each product has its own specific temperature requirements.

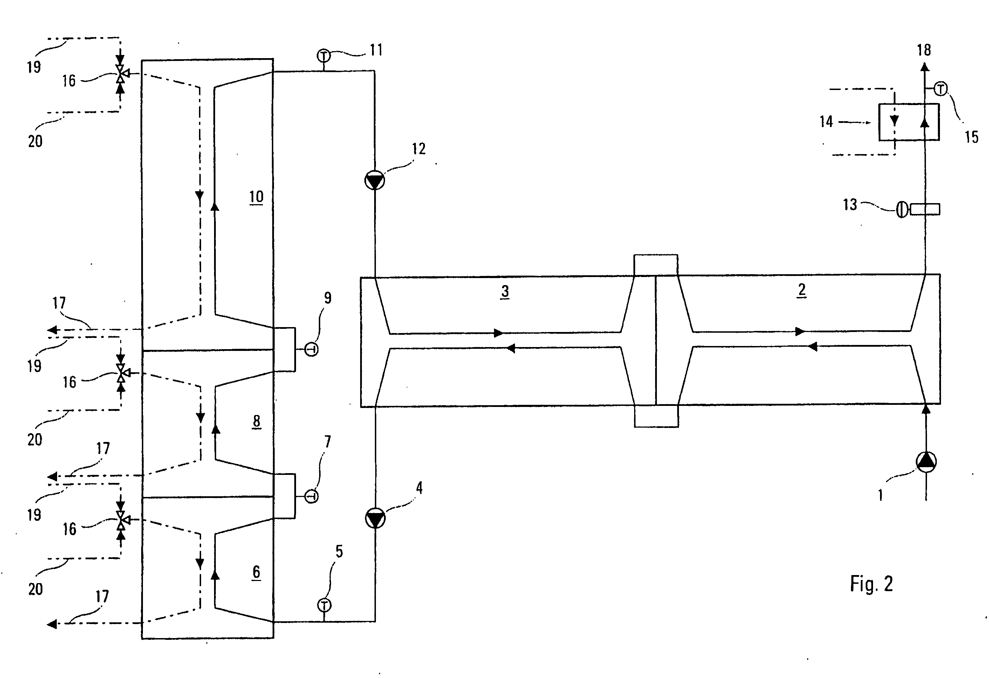

The apparatus taken here as starting point (see fig. 2) is intended for the pasteurizing of beer. The apparatus consists of two main heat exchangers, i.e. a regenerative heat exchanger which is divided into two zones 2, 3, and a pasteurizing heat exchanger which is divided into three zones 6, 8, 10.

The product is led into the regenerative zone 2 by means of a supply pump 1, where the product at 2°C is heated to 33°C. The product is now led further to the second regenerative zone 3 where it is heated to 65°C. A booster pump 4 and 12 ensures that there is an over-pressure, partly in the pasteurizing heat exchanger 6, 8, 10 and partly in the cooling part of the regenerative heat exchanger 2, 3. This over-pressure ensures that in the event of a possible leakage, air or fluid does not come into the pipe system, but only out. In this way it is avoided that bacteria capable of survival are transferred to the pasteurized product.

A temperature sensor 5 is provided before the inlet to the pasteurizing heat exchanger.

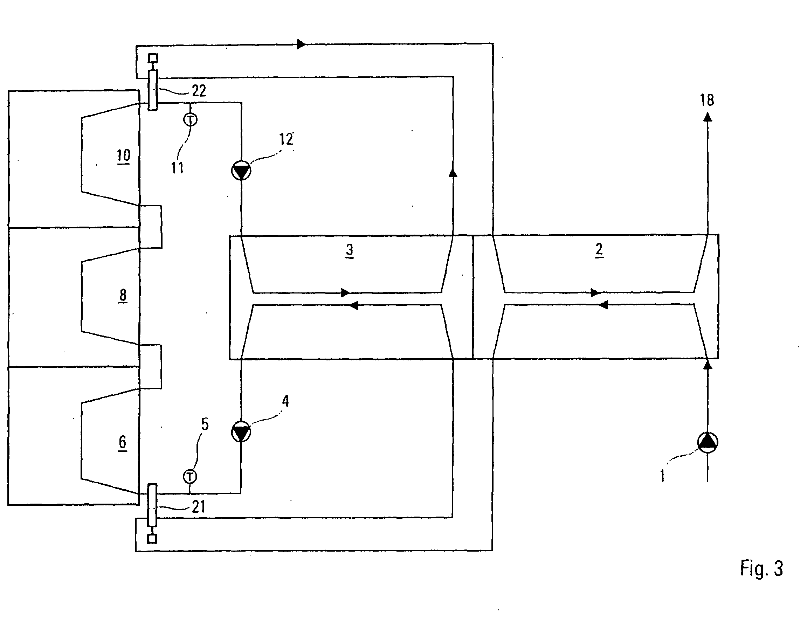

A valve 21 (see fig. 3) is placed as close as possible to the pasteurizing heat exchanger. During normal operation, this valve 21 ensures that the inlet and the outlet from the regenerative heat exchanger 3 on the non-pasteurized side are held separate. During a stop in production, the valve 21 is opened, whereby re-circulation is made possible in this side of the regenerative heat exchanger 3. This valve is optional and is not used in the cases/configurations where the outlet temperature from the heat exchanger 3 is below the temperature limit for the recording of PU.

At the inlet to the first zone 6 of the pasteurizing heat exchanger, the product at 65°C is heated on the primary side to 72°C, this temperature being held through the zones 8 and 10.

A valve 22 is placed as close as possible after the pasteurizing heat exchanger. Under normal operation, this valve must ensure that the inlet and outlet from the regenerative heat exchanger 3 are held separate on the pasteurized side. During a stop in production, the valve is opened, whereby re-circulation becomes possible in this second side of the regenerative heat exchanger 3.

When the product leaves the last pasteurizing zone 10, it is pumped via the booster pump 12 into the cooling part of the regenerative part 3 and is cooled down to approx. 40°C, and further to the last regenerative zone 2 where the product is cooled down to 9°C. A flow-control valve 13 can be placed after the regenerative part. Hereafter, the product flows through a cooler 14 and further to an outlet 18 where a possible buffer tank and/or a bottling or containerising plant is placed. With an embodiment having a minimal buffer tank, the flow-control valve 13 ensures that the buffer tank does not get over-filled, i.e. that the flow is controlled by the level in the buffer tank.

In an apparatus without buffer tank, it is the filling plant (not shown) which determines the flow through the apparatus.

The cooler 14 is used only if the outlet temperature of the product becomes too high, e.g. as a result of a stop in operations and subsequent re-starting.

A temperature sensor 7, 9, 11 is placed after each pasteurizing part 6, 8, 10. A temperature sensor 15 is also placed after the cooler 14. These sensors register whether or not the necessary temperatures have been achieved, so that heating and cooling respectively can be controlled on the secondary side of the pasteurizing heat exchanger 6, 8, 10.

The heating/cooling sources in the regenerative part 2, 3 consist of the product itself (hence regenerative), and in the pasteurizing part 6, 8, 10 of hot and cold water 19, 20 respectively, where the amount of heat in the water is determined by signals from the temperature sensors 7, 9, 11 in the individual pasteurizing zones 6, 8, 10. The regulation of the water supply itself is effected in a mixing valve 16 of commonly-known type. The return water from the secondary side of the pasteurizing heat exchanger is led away via a return pipe 17, possibly for heating with a view to re-use in the heat exchanger.

The following is a description of the apparatus during a stop in production.

The regenerative heat exchanger can be divided into two zones 2 and 3 as shown, or constitute a single zone. In the event of a stop in production, the temperature profile in the first zone will be constant for the first minutes, after which the temperature will slowly approach the average temperature for the heat exchanger. In the second zone, or if there is only one zone, the temperature in the last part of the exchanger and in the pipe connections hereto will be so high that PU is recorded. To avoid this, re-circulation takes place in both the regenerative zones and pipe connections until a constant average temperature is achieved below the temperature limit for the recording of PU (e.g. 53°C). The re-circulation is effected by opening the valves 21 and 22.

The pasteurizing zones 6, 8, 10 will be cooled down to e.g. 56°C during a production stop, so that the recording of PU is stopped.

The following is a description of the apparatus when re-started after a stop in production.

After a stop in production, all of the pasteurizing zones are re-heated to the normal temperatures to ensure that no under-pasteurization occurs, and also that over-pasteurizing is limited as much as possible.

When re-starting an apparatus without buffer tank, the process is controlled by raising the temperature on the secondary side of the pasteurizing heat exchanger 6, 8, 10 depending on the speed of flow.

## Claims

1. An apparatus for the pasteurizing of liquid products in a continuous flow, the apparatus consisting of.
- a regenerative part (2 ; 2, 3) into which the product is fed by a supply pump (1),
- a pasteurizing part (6; 6, 8, 10) to which the product is led from the regenerative part and from which pasteurizing part the product is led back to the regenerative part, both the regenerative part and the pasteurizing part consisting of heat exchangers (2, 6; 2, 3, 6, 8, 10),
- a mixing valve (16) for supplying hot or cold water to the pasteurizing part, so that the pasteurizing part cannot only heat the product to the pasteurization temperature, but also cool the product down in the event of a stop in production, and
- temperature sensors (5, 11) placed before and after the pasteurizing part for controlling the pasteurization process.

2. An apparatus according to claim 1 for the pasteurizing of beer, wherein the apparatus consists of two main heat exchangers, a regenerative heat exchanger (2, 3) which is divided into two zones (2, 3), and a pasteurizing heat exchanger (6, 8, 10) which is divided into three zones (6, 8, 10).

3. An apparatus according to claim 2, wherein a temperature sensor (7, 9, 11) is placed after each of said three pasteurizing zones so as to register whether or not the necessary temperatures have been achieved so that heating and cooling, respectively can be controlled on the secondary side of the pasteurizing heat exchanger.

4. A method for the pasteurizing of liquid products in a continuous flow and comprising the following steps:
- providing a regenerative part (2 ; 2, 3) of a pasteurizing apparatus and a pasteurizing part (6 ; 6, 8, 10) of said pasteurizing apparatus, both the regenerative part and the pasteurizing part consisting of heat exchangers (2, 6 ; 2, 3, 6, 8, 10),
- feeding product into the regenerative part,
- leading the product from the regenerative part to the pasteurizing part,
- leading the product from the pasteurizing part back to the regenerative part,
- heating the product in the regenerative part by transfer of heat from the product led back to the regenerative part from the pasteurizing part,
- heating the product to the pasteurization temperature in the pasteurizing part and cooling the product down in the pasteurizing part in the event of a production stop by supplying hot or cold water, respectively, to the pasteurizing part, and
- controlling the pasteurization process by means of temperature sensors (5, 11) placed before and after the pasteurizing part

5. A method according to claim 4 for the pasteurizing of beer, wherein the pasteurizing apparatus consists of two main heat exchangers, a regenerative heat exchanger which is divided into two zones, and a pasteurizing heat exchanger which is divided into three zones.

6. A method according to claim 5, the method comprising the further steps of:
- providing a temperature sensor (7, 9, 11) placed after each of said three pasteurizing zones (6, 8, 10),
- by means of said temperature sensors registering whether or not the necessary temperatures have been achieved, and
- based on said registration by said temperature sensors, controlling heating and cooling, respectively, on the secondary side of the pasteurizing heat exchanger.

## Patentansprüche

1. Vorrichtung zur Pasteurisierung von flüssigen Produkten im kontinuierlichen Fluss, bestehend aus:
- einem regenerativen Teil (2; 2, 3), zu welchem das Produkt durch eine Zuführungspumpe (1) zugeführt wird,
- einem Pasteurisierteil (6; 6, 8, 10), zu welchem das Produkt vom regenerativen Teil geführt wird, und von welchem Pasteurisierteil das Produkt zum regenerativen Teil rückgeführt wird, wobei sowohl das regenerative Teil als auch das Pasteurisierteil aus Wärmetauschern (2, 6; 2, 3, 6, 8, 10) bestehen,
- einem Mischventil (16) zur Zufuhr von Heiß- oder Kaltwasser zum Pasteurisierteil, so dass das Pasteurisierteil nicht nur das Produkt auf die Pasteurisiertemperatur erhitzen kann, sondern im Falle einer Produktionsstockung auch das Produkt abkühlen kann, und
- Temperatursensoren (5, 11), die zur Steuerung des Pasteurisiervorganges vor und hinter dem Pasteurisierteil angeordnet sind.

2. Vorrichtung gemäß Anspruch 1 zur Pasteurisierung von Bier, bei der die Vorrichtung aus zwei Hauptwärmetauschern besteht, einem regenerativen Wärmetauscher (2, 3), der in zwei Zonen (2, 3) eingeteilt ist, und einem Pasteurisierwärmetauscher (6, 8, 10), der in drei Zonen (6, 8, 10) eingeteilt ist.

3. Vorrichtung gemäß Anspruch 2, bei der ein Temperatursensor (7, 9, 11) hinter jeder der erwähnten drei Pasteurisierzonen angeordnet ist, um zu registrieren, ob die erforderlichen Temperaturen erreicht sind, so dass Erhitzen bzw. Abkühlen auf der Sekundärseite des Pasteurisierwärmetauschers gesteuert werden kann.

4. Verfahren zur Pasteurisierung von flüssigen Produkten im kontinuierlichen Fluss, enthaltend die folgenden Schritte:
- Vorsehen eines regenerativen Teils (2; 2, 3) einer Pasteurisiervorrichtung und eines Pasteurisierteils (6; 6, 8, 10) der erwähnten Pasteurisiervorrichtung, wobei sowohl das regenerative Teil als auch das Pasteurisierteil aus Wärmetauschern bestehen (2, 6; 2, 3, 6, 8, 10),
- Zuführen des Produktes zum regenerativen Teil,
- Führen des Produktes vom regenerativen Teil zum Pasteurisierteil,
- Rückführen des Produktes vom Pasteurisierteil zum regenerativen Teil,
- Erhitzen des Produktes im regenerativen Teil durch Übertragung von Hitze vom Produkt, das vom Pasteurisierteil zum regenerativen Teil rückgeführt worden ist,
- Erhitzen des Produktes auf die Pasteurisiertemperatur im Pasteurisierteil und im Falle einer Produktionsstockung Abkühlen des Produktes im Pasteurisierteil durch Zufuhr von Heiß- bzw. Kaltwasser zum Pasteurisierteil und
- Steuern des Pasteurisiervorganges durch Temperatursensoren (5, 11), die vor und hinter dem Pasteurisierteil angeordnet sind.

5. Verfahren gemäß Anspruch 4 zur Pasteurisierung von Bier, bei dem die Pasteurisiervorrichtung aus zwei Hauptwärmetauschern besteht, einem regenerativen Wärmetauscher, der in zwei Zonen eingeteilt ist, und einem Pasteurisierwärmetauscher, der in drei Zonen eingeteilt ist.

6. Verfahren gemäß Anspruch 5, ferner enthaltend die folgenden Schritte:
- Vorsehen eines Temperatursensors (7, 9, 11), der hinter jeder der erwähnten drei Pasteurisierzonen (6, 8, 10) angeordnet ist,
- durch die Temperatursensoren Registrieren, ob die erforderlichen Temperaturen erreicht sind, und
- auf der Basis der erwähnten Registrierung durch die genannten Temperatursensoren Steuern von Erhitzen bzw. Abkühlen auf der Sekundärseite des Pasteurisierwärmetauschers.

## Revendications

1. Appareil de pasteurisation de produits liquides s'écoulant en continu, l'appareil comprenant:
- une partie régénérative (2; 2, 3) dans laquelle le produit est alimenté à l'aide d'une pompe (1) d'alimentation,
- une partie de pasteurisation (6; 6, 8, 10) vers laquelle le produit est conduit à partir de la partie régénérative et à partir de quelle partie pasteurisante le produit est ramené à la partie régénérative, la partie régénérative ainsi que la partie pasteruisante sont constituées par des récupérateurs de chaleur (2, 6; 2, 3, 6, 8, 10),
- un robinet mélangeur (16) pour fournir la partie pasturisante avec de l'eau chaude ou froide, afin que la partie pasteurisante n'est pas seulement capable de chauffer le produit jusqu'à la température de pasteurisation, mais également capable de refroider le produit lors d'un arrêt de la production, et
- des capteurs de température (5, 11) placés avant et après la partie pasteurisante afin de contrôler le processus de pasteurisation.

2. Appareil selon la revendication 1 pour la pasteurisation de bière, où l'appareil comprend deux récupérateurs de chaleur, un récupérateur de chaleur régénératif (2, 3) qui est divisé en deux zones (2, 3), et un récupérateur de chaleur pasteurisant (6, 8, 10) qui est divisé en trois zones (6, 8, 10).

3. Appareil selon la revendication 2, où un capteur de température (7, 9, 11) est placé après chacune desdites trois zones pasteurisantes afin d'enregistrer si oui ou non les températures nécessaires ont étés obtenues afin que respectivement, l'échauffement et le refroidissement peuvent être contrôlés sur le côté secondaire du récupérateur de chaleur pasteurisant.

4. Procédé de pasteurisation de produits liquides s'écoulant en continu et comprenant les étapes suivantes:
- fournir une partie régénérative (2; 2, 3) d'un appareil de pasteurisation et une partie (6; 6, 8, 10) dudit appareil de pasteurisation, la partie régénérative ainsi que la partie pasteruisante sont constituées par des récupérateurs de chaleur (2, 6; 2, 3, 6, 8, 10),
- alimenter le produit en dedans de la partie régénérative,
- guidant le produit de la partie régénérative à la partie pasteurisante,
- ramener le produit de la partie pasteurisante à la partie régénérative,
- chauffer le produit dans la partie régénérative par transfer de chaleur du produit ramené à la partie régénérative à partir de la partie pasteurisante,
- chauffer le produit jusqu'à la température de pasteurisation dans la partie pasteurisante et refroidir le produit dans la partie pasteurisante lors d'un arrêt de production en alimentant la partie pasteurisante avec respectivement de l'eau chaude ou froide, et
- contrôler le processus de pasteurisation par le moyen de capteurs de température (5, 11) placés avant et après la partie pasteurisante.

5. Procédé selon la revendication 4 pour la pasteurisation de bière, où l'appareil de pasteurisation comprend deux récupérateurs de chaleur principals, un récupérateur de chaleur régénératif qui est divisé en deux zones et un récupérateur de chaleur pasteurisant qui est divisé en trois zones.

6. Procédé selon la revendication 5, le procédé comprenant les étapes supplémentaires de:
- fournir un capteur de température (7, 9, 11) placé après chacune desdites trois zones de pasteurisation (6, 8, 10),
- par le moyen desdits capteurs de température enregistrer si les températures nécessaires ont étés obtenues ou non, et
- basé sur ledit enregistrement par lesdits capteurs de températures, contrôler respectivement l'échauffement et le refroidissement sur le côté secondaire du récupérateur de chaleur pasteurisant.
